# EUROPEAN PATENT SPECIFICATION

(11) **EP 2 418 911 B1**
(45) Date of publication and mention of the grant of the patent: **29.05.2013**
(21) Application number: 10008467.2
(22) Date of filing: 13.08.2010
(51) Int. Cl.: H04W 76/02

(54) **Method, public land mobile network, user equipment and program for controlling the establishment of a packet data connection**
Verfahren, öffentliches Landfunknetz, Teilnehmergerät und Programm zur Steuerung des Aufbaus einer Paketdatenverbindung
Procédé, réseau mobile terrestre public, équipement d'utilisateur et programme pour contrôler l'établissement d'une connexion de données en paquet

(43) Date of publication of application: 15.02.2012
(73) Proprietor: Deutsche Telekom AG, 53113 Bonn (DE)
(72) Inventor: Nenner, Karl-Heinz, 53332 Bornheim (DE); Jacobsohn, Dieter, 53229 Bonn (DE); Schmitt, Harald, 56170 Bendorf (DE)
(74) Representative: Schwöbel, Thilo K.

(56) References cited:
- EP-A1- 1 655 901
- WO-A1-2008/011918
- WO-A1-2010/016546
- GB-A- 2 431 069
- US-A1- 2006 183 472

## Description

### BACKGROUND

The present invention relates to a method, a public land mobile network, a User Equipment and a program for controlling the establishment of a packet data connection of a User Equipment to a packet data network. According to the present invention, an efficient configuration of the packet data connection establishment of User Equipments is possible, especially regarding those network access requests involved in the use of Packet Switched (PS) domain related traffic.

Mobile devices (hereinafter also called mobile terminals or User Equipments) are more and more able to establish connections to packet based networks, usually called packet data networks, e.g. the internet or private or corporate networks, such as VPN networks (virtual private networks). Normally, a network access information is used such as an access point name (APN) in order to address the packet data network to be connected to. The network access information or access point name (APN) can either be defined by the User Equipment or by the public land mobile network at the time of requesting the connection, or the network access information or access point name (APN) is defined by the public land mobile network (e.g. by configuration or as a part of the subscriber information stored in the Home Location Register). In case that an invalid or unknown or missing network access information or access point name (APN) is used by the User Equipment, a corresponding error messages is generated by the public land mobile network and sent to the User Equipment.

The establishment of a packet data connection is either possible based on the active involvement of the user (e.g. by means of a user input to the User Equipment), or automatically by the User Equipment (e.g. by means of a (software) application running on the User Equipment). Typically, a connection to a packet data network is established in order to provide web browsing functionality, or e-mail functionality or the like. Furthermore, applications become more and more widespread that automatically establish a packet data connection to a packet data network, e.g. social network applications, i.e. for example after switching-on of the User Equipment or after a single start of such an application, these applications repeatedly request packet data connection to one or a plurality of packet data networks. This results in an increased number of unwanted packet data connection requests and hence unwanted network load (and possibly costs for the subscriber).

One strategy for subscribers to cope with such unwanted packet data connection establishment requests consists in storing deliberately network access information (or access point name (APN) information) relating to inaccessible or inexistent packet data networks. This avoids unwanted costs for the subscriber but results in an increase of unwanted (signalisation) network traffic related especially to such automatically generated network establishment requests.

Document US 2006/0183472 discloses blocking for a tire period of data call attempt after a previous attempt was unsuccessful.

Document WO 2010/016546 discloses blocking connection requests for a wireless device towards an APN after a rejection for a certain tire.

A further disadvantage of the current situation is that in case a subscriber resigns a subscription for a packet data network access, this is not necessarily reflected in the settings of the corresponding User Equipment related to network access information or the access point name (APN) information.

The same consequence occurs in case of selling the User Equipment or in case of a change of use by the same proprietor of the User Equipment.

### SUMMARY

An object of the present invention is to overcome - at least partly - the limitations of the current state of the art, and to provide a more adapted control regarding the establishment of packet data connections of a User Equipment to a packet data network via a public land mobile network, especially the User Equipment's behaviour after requesting a missing or unknown packet data network (i.e. in case of requesting the establishment of a connection involving a missing or unknown network access information (or access point name (APN)).

The object of the present invention is achieved by a method for controlling the establishment of a packet data connection of a User Equipment to a packet data network by means of using a public land mobile network, wherein the packet data network is one out of
-- a Packet Switched domain or a Packet Data Network (PDN) of a public land mobile network, or
-- an external packet data network, or
-- an internal packet data network, or
-- a virtual private network,
wherein by means of a connection request related to a specific network access information, the User Equipment requests the establishment of the packet data connection to the packet data network, and wherein in case that the public land mobile network detects a situation of unavailability regarding the specific network access information:
-- an unavailability message is sent to the User Equipment indicating missing or unknown resources regarding the specific network access information, and
-- a subsequent connection request of the User Equipment related to the specific network access information is blocked during at least a time interval corresponding to a blocking time information.

According to the present invention, a subsequent connection request of the User Equipment related to a further specific network access information is blocked during at least the time interval corresponding to the blocking time information or during at least a further time interval corresponding to a further blocking time information.

According to the present invention, it is advantageously possible to reduce the network load of the public land mobile network with respect to unwanted packet data connection requests. This means that according to the present invention manually triggered packet network connection requests (i.e. triggered e.g. by a user input to the input device of the User Equipment) as well as automatically triggered packet network connection requests (i.e. triggered by an application software of the User Equipment) are blocked for a predefined period of time subsequent to an unsuccessful attempt to connect to a packet data network related to a specific network access information. Furthermore, it is advantageously possible according to the present invention that the battery drain of User Equipments (mobile devices) is reduced as unnecessary access requests can be avoided and hence the associated energy consumption of the mobile devices saved.

Thereby, it is advantageously possible to change the behaviour of the User Equipment such that unwanted packet data connection request are avoided.

According to the present invention, a plurality of packet data networks are blocked (at least temporarily) for a connection establishment after an initial unsuccessful attempt to establish a connection. Such a plurality of different packet data networks (and corresponding network access information or access point name information) is hereinafter referred to by the terms "specific network access information" and "further specific network access information". It is to be understood that also more than two packet data network or correspondingly more than two pieces of network access information (or access point names) are possible to be used in relation with the present invention. Especially, it is possible according to the present invention that a list of network access information is used by the User Equipment such that all packet data requests to the corresponding packet data networks are at least temporarily blocked after a first unsuccessful attempt to connect to one packet data network (i.e. after the reception by the User Equipment of the unavailability message from the public land mobile network.

According to the present invention, it is furthermore preferred that an availability message is sent from the public land mobile network to the User Equipment,
-- wherein the availability message with regard to the specific network access information indicates that blocking of subsequent connection requests of the User Equipment related to the specific network access information is to be removed, and/or,
-- wherein the availability message with regard to the further specific network access information indicates that blocking of subsequent connection requests of the User Equipment related to the further specific network access information is to be removed.

Thereby, it is advantageously possible to provide a reversal of the blocking of one or of a plurality of network access information.

It is furthermore preferred according to the present invention that the specific network access information and/or the further specific network access information is an access point name (APN).

According to the present invention, it is still furthermore preferred that a switching-off or an at least partial deactivation of the User Equipment results:
-- in a deletion of the blocking time information and/or of the further blocking time information within the User Equipment, and/or
-- in an at least temporary inapplicability of the blocking time information and/or of the further blocking time information within the User Equipment.

Thereby, a flexible behaviour of the User Equipment is easily established and it is avoided that due to the possibility of blocking certain network access information (and hence corresponding packet data networks) the usability of the User Equipment is reduced. This means that according to an alternative of the present invention, the User Equipment is configured such that after a switching-off and a switching-on operation (or at least a partial deactivation and a further activation of the User Equipment) the blocking time information stored in the User Equipment are completely or partially deleted (and a further blocking of a specific network access information or of further specific network access information requires an (unsuccessful) attempt of a connection request of the User Equipment and a subsequent transmission of an unavailability message to the User Equipment (indicating one specific network access information to be blocked or indicating a plurality of pieces of specific network access information (or further specific network access information) to be regarded as at least temporarily blocked). Furthermore, this means that according to another alternative of the present invention, the User Equipment is configured such that after a switching-off and a switching-on operation (or at least a partial deactivation and a further activation of the User Equipment) the blocking time information stored in the User Equipment is not deleted (or not completely deleted), but regarded as inapplicable. This means that a reactivation of the blocking time information (and/or the further blocking time information) is possible to be effected without transmitting the blocking time information (and/or the further blocking time information) but only by transmitting an information corresponding to reactivate the previously stored information regarding blocking certain network access information (at least for a certain interval of time).

Furthermore, it is advantageous that
-- a change of the blocking time information and/or
-- a change of the further blocking time information and/or
-- a change of the applicability or the inapplicability of the blocking time information and/or
-- a change of the applicability or the inapplicability of the further blocking time information, is transmitted by means of:
-- a Non Access Stratum (NAS) communication, or
-- an Access Stratum (AS) layer, or
-- a mechanism involving a preferably external application server and in a transparent manner to the public land mobile network, or
-- a message broadcast in the current cell of the User Equipment.

Thereby, a control of the connection establishment as well as of the validity or inapplicability of the blocking time information or the further blocking time information can be easily implemented. A change of the blocking time information (and/or of the further blocking time information) especially means that the length of the time interval corresponding to the blocking time information (and/or to the further blocking time information) is changed. For example, the blocking time interval (and/or the further blocking time interval) could alternatively be set to 1 second or 3 seconds or 10 seconds or 30 seconds or 60 seconds or 180 seconds or 600 seconds and the transmitted blocking time information corresponds to an information indicating one of these alternatives in a coded manner, e.g. by means of setting one or a plurality of bits in a specific "blocking time information" byte or by transmitting a certain value in a "blocking time information" variable such as "1" (corresponding, e.g., to 1 second), "2" (corresponding, e.g., to 3 seconds), "3" (corresponding, e.g., to 10 seconds), "4" (corresponding, e.g., to 30 seconds), or the like.

According to a further preferred embodiment of the present invention,
-- a change of the blocking time information and/or
-- a change of the further blocking time information and/or
-- a change of the applicability or the inapplicability of the blocking time information and/or
-- a change of the applicability or the inapplicability of the further blocking time information, is triggered by means of:
-- a Non Access Stratum (NAS) communication, or
-- an Application Server (AS) layer, or
-- a mechanism involving a preferably external application server and in a transparent manner to the public land mobile network, or
-- a message broadcast in the current cell of the User Equipment, or
-- a user input via the user interface of the User Equipment, or
-- a user input on a web site, especially a web site accessed via the User Equipment.

Thereby, it is advantageously possible that the blocking time information and/or the further blocking time information is triggered to be changed and transmitted to the User Equipment in a simple and convenient manner. According to the present invention, a mechanism involving a preferably external application server and triggering a change of the first and/or the second access control information in a transparent manner to the public land mobile network to the User Equipment is for example: an Open Mobile Alliance (OMA) device management or a Third Generation Partnership Project (GPP) Over the Air (OTA) mechanism, or any other over the air mechanism.

It is furthermore preferred according to the present invention that the blocking time information and/or the further blocking time information dependents on whether the public land mobile network is:
- the home public land mobile network of the User Equipment, or
- the visited public land mobile network of the User Equipment.

Thereby, it is advantageously possible that the behaviour of the User Equipment can be easily adapted to different situations whether it is roaming or not.

According to a further preferred embodiment of the present invention, the blocking time information and/or the further blocking time information dependents on the specific network access information and/or on the specific application of the User Equipment using the network access information.

The present invention further relates to a public land mobile network according to claim 9.

The invention furthermore relates to a User Equipment according to claim 10.

Such a public land mobile network and such a User Equipment have the advantage that the behaviour of User Equipments can be controlled in a more appropriate manner in order to reduce network load that does not serve the subscriber's needs.

According to the present invention, it is preferred that the User Equipment comprises a memory for storing the blocking time information and/or the further blocking time information.

Furthermore, it is preferred according to the present invention that a switching-off or an at least partial deactivation of the User Equipment results:
-- in a deletion of the blocking time information and/or of the further blocking time information within the User Equipment, and/or
-- in an at least temporary inapplicability of the blocking time information and/or of the further blocking time information within the User Equipment.

Additionally, the present invention relates to a program comprising a computer readable program code for executing the inventive method or for configuring or controlling an inventive User Equipment or an inventive public land mobile network.

### BRIEF DESCRIPTION OF THE DRAWINGS

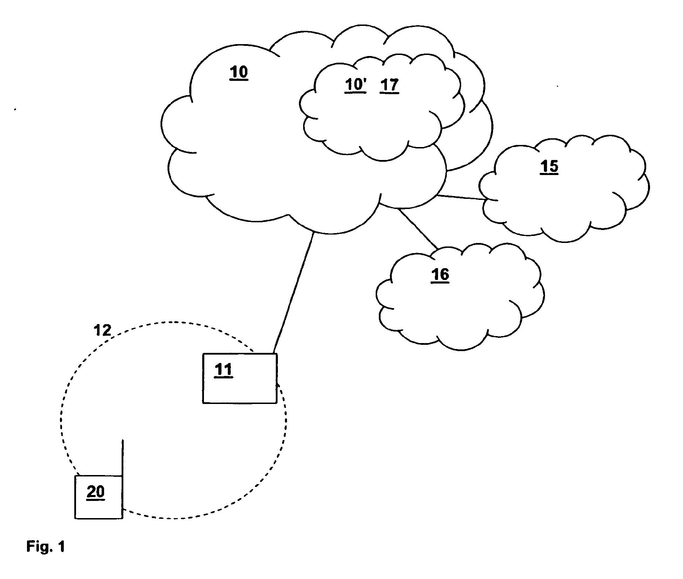

Figure 1 schematically illustrates a cellular public land mobile network comprising a radio cell, wherein further packet data networks are accessible to a User Equipment.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described of illustrated herein.

In this section, the method is described for illustration using a cellular mobile network according to the E-UTRAN standards exemplarily. The method is in no way limited to this example and can preferably used for configuration of network nodes using any technology not even specifically for cellular mobile networks only.

In Figure 1, a cellular public land mobile network 10 is schematically represented comprising a radio cell 12 which is representative for usually a plurality of radio cells. The cell 12 comprises a base station transceiver 11 and a corresponding device such as an NodeB or an eNodeB. Via the public land mobile network 10, further packet data networks are accessible to the User Equipment 20. Such packet data networks comprise, e.g.:
-- a Packet Switched 10' domain or a Packet Data Network (PDN) of the public land mobile network 10, or
-- an external packet data network 15, 16, or
-- an internal packet data network 17, or
-- a virtual private network.

According to the present invention, the behaviour of the User Equipment 20 is modified with respect to the prior art in that after an unsuccessful attempt to establish a packet data connection to one of the packet data networks 10', 15, 16, 17 further request are not automatically repeated by the User Equipment 20 but a time blocking time information is communicated to the User Equipment 20 such that subsequent requests to establish such a packet data connection are blocked. This means that the application software of the User Equipment 20 might still try to establish the packet data connection but a lower layer of the protocol stack realized within the User Equipment 20 prevents the transmission of such unwanted connection establishment requests to the public land mobile network 10 provided that a time interval corresponding to the blocking time information associated to this specific network access information has not yet elapsed.

According to the present invention, it is also possible to reverse such a blocking related to a specific network access information. This can be done by means of an availability message sent to the User Equipment. This means that by such an availability message, a network access information that has previously been set to be blocked (by means of an unavailability message previously sent to the User Equipment) is unblocked, i.e. an access to a corresponding network access information is possible despite the fact that a global blocking time interval applicable to that specific network access information (to be unblocked) or a specifically applicable blocking time information has not yet elapsed completely.

## Claims

1. Method for controlling the establishment of a packet data connection of a User Equipment (20) to a packet data network (10', 15, 16, 17) by means of using a public land mobile network (10), wherein the packet data network (10', 15, 16, 17) is one out of
-- a Packet Switched (10') domain or a Packet Data Network (PDN) of a public land mobile network (10), or
-- an external packet data network (15, 16), or
-- an internal packet data network (17), or
-- a virtual private network,
wherein by means of a connection request related to a specific network access information, the User Equipment (20) requests the establishment of the packet data connection to the packet data network (10', 15, 16, 17), and wherein in case that the public land mobile network (10) detects a situation of unavailability regarding the specific network access information:
-- an unavailability message is sent to the User Equipment (20) indicating missing or unknown resources regarding the specific network access information, and
-- a subsequent connection request of the User Equipment (20) related to the specific network access information is blocked during at least a time interval corresponding to a blocking time information,
wherein a subsequent connection request of the User Equipment (20) related to a further specific network access information is blocked during at least the time interval corresponding to the blocking time information or during at least a further time interval corresponding to a further blocking time information.

2. Method according to claim 1, wherein an availability message is sent from the public land mobile network (10) to the User Equipment (20),
-- wherein the availability message with regard to the specific network access information indicates that blocking of subsequent connection requests of the User Equipment (20) related to the specific network access information is to be removed. and/or,
-- wherein the availability message with regard to the further specific network access information indicates that blocking of subsequent connection requests of the User Equipment (20) related to the further specific network access information is to be removed.

3. Method according to one of the preceding claims, wherein the specific network access information and/or the further specific network access information is an access point name (APN).

4. Method according to one of the preceding claims, wherein a switching-off or an at least partial deactivation of the User Equipment (20) results:
-- in a deletion of the blocking time information and/or of the further blocking time information within the User Equipment (20), and/or
-- in an at least temporary inapplicability of the blocking time information and/or of the further blocking time information within the User Equipment (20).

5. Method according to one of the preceding claims, wherein
-- a change of the blocking time information and/or
-- a change of the further blocking time information and/or
-- a change of the applicability or the inapplicability of the blocking time information and/or
-- a change of the applicability or the inapplicability of the further blocking time information,
is transmitted by means of:
-- a Non Access Stratum (NAS) communication, or
-- an Access Stratum (AS) layer, or
-- a mechanism involving a preferably external application server and in a transparent manner to the public land mobile network (10), or
-- a message broadcast in the current cell of the User Equipment (20).

6. Method according to one of the preceding claims, wherein
-- a change of the blocking time information and/or
-- a change of the further blocking time information and/or
-- a change of the applicability or the inapplicability of the blocking time information and/or
-- a change of the applicability or the inapplicability of the further blocking time information,
is triggered by means of:
-- a Non Access Stratum (NAS) communication, or
-- an Application Server (AS) layer, or
-- a mechanism involving a preferably external application server and in a transparent manner to the public land mobile network (10), or
-- a message broadcast in the current cell of the User Equipment (20), or
-- a user input via the user interface of the User Equipment, or
-- a user input on a web site, especially a web site accessed via the User Equipment (20).

7. Method according to one of the preceding claims, wherein the blocking time information and/or the further blocking time information dependents on whether the public land mobile network (10) is:
- the home public land mobile network of the User Equipment (20), or
- the visited public land mobile network of the User Equipment (20).

8. Method according to one of the preceding claims, wherein the blocking time information and/or the further blocking time information dependents on the specific network access information and/or on the specific application of the User Equipment (20) using the network access information.

9. Public land mobile network (10), providing a control of the establishment of a packet data connection of a User Equipment (20) to a packet data network (10', 15, 16, 17), wherein the packet data network (10', 15, 16, 17) is one out of
-- a Packet Switched (10') domain or a Packet Data Network (PDN) of a public land mobile network (10), or
-- an external packet data network (15, 16), or
-- an internal packet data network (17), or
-- a virtual private network,
wherein by means of a connection request of the User Equipment (20) related to a specific network access information, the establishment of the packet data connection is requested by the User Equipment (20) to the packet data network (10', 15, 16, 17), and wherein the public land mobile network is provided such that in case of a detection by the public land mobile network (10) of a situation of unavailability regarding the specific network access information, it is provided for the generation of an unavailability message sent to the User Equipment (20) and indicating missing or unknown resources regarding the specific network access information such that
-- a subsequent connection request of the User Equipment (20) related to the specific network access information is blocked during at least a time interval corresponding to a blocking time information, and
-- a subsequent connection request of the User Equipment (20) related to a further specific network access information is blocked during at least the time interval corresponding to the blocking time information or during at least a further time interval corresponding to a further blocking time information.

10. User Equipment (20) providing a control of the establishment of a packet data connection of the User Equipment (20) to a packet data network (10', 15, 16, 17) by means of using a public land mobile network (10), wherein the packet data network (10', 15, 16, 17) is one out of
-- a Packet Switched (10') domain or a Packet Data Network (PDN) of a public land mobile network (10), or
-- an external packet data network (15, 16), or
-- an internal packet data network (17), or
-- a virtual private network,
wherein by means of a connection request of the User Equipment (20) related to a specific network access information, the establishment of the packet data connection is requested by the User Equipment (20) to the packet data network (10', 15, 16, 17), and wherein the User Equipment (20) is provided such that on reception of an unavailability message sent to the User Equipment (20) from the public land mobile network (10), indicating missing or unknown resources regarding the specific network access information,
-- a subsequent connection request of the User Equipment (20) related to the specific network access information is blocked during at least a time interval corresponding to a blocking time information, and
-- a subsequent connection request of the User Equipment (20) related to a further specific network access information is blocked during at least the time interval corresponding to the blocking time information or during at least a further time interval corresponding to a further blocking time information.

11. User Equipment (20) according to claim 10, wherein the User Equipment (20) comprises a memory for storing the blocking time information and/or the further blocking time information.

12. User Equipment (20) according to claim 10 or 11, wherein a switching-off or an at least partial deactivation of the User Equipment (20) results:
-- in a deletion of the blocking time information and/or of the further blocking time information within the User Equipment (20), and/or
-- in an at least temporary inapplicability of the blocking time information and/or of the further blocking time information within the User Equipment (20).

13. Program comprising a computer readable program code for executing a method according to one of claims 1 to 8 or for configuring or controlling a User Equipment (20) according one of claims 10 to 12 or a public land mobile network according to claim 9.

## Patentansprüche

1. Verfahren zur Steuerung der Herstellung einer Paketdatenverbindung eines Teilnehmergeräts (20) mit einem Paketdatennetz (10', 15, 16, 17) durch Benutzung eines öffentlichen, landgestützten Mobilfunknetzes (10), wobei das Paketdatennetz (10', 15, 16, 17) entweder
-- eine Paketvermittlungsdomäne (10') oder ein Paketdatennetz (PDN) eines öffentlichen, landgestützten Mobilfunknetzes (10), oder
-- ein externes Paketdatennetz (15, 16), oder
-- ein internes Paketdatennetz (17), oder
-- ein virtuelles privates Netz ist,
wobei mittels einer Verbindungsanfrage, das Teilnehmergerät (20) die Herstellung ein Paketdatenverbindung mit dem Paketdatennetz (10', 15, 16, 17) anfordert, wobei die Verbindungsanfrage mit einer spezifischen Netzzugangsinformation zusammenhängt, und wobei im Falle, dass das öffentliche, landgestützte Mobilfunknetz (10) eine Nichtverfügbarkeitssituation bezüglich der spezifischen Netzzugangsinformation erkennt:
-- eine Nichtverfügbarkeitsnachricht an das Teilnehmergerät (20) gesendet wird, beinhaltend Hinweise auf fehlende oder unbekannte Ressourcen bezüglich der spezifischen Netzzugangsinformation, und
-- eine weitere Verbindungsanfrage des Teilnehmergeräts (20) während wenigstens eines Zeitintervalls entsprechend einer Blockierzeitinformation blockiert wird, wobei die weitere Verbindungsanfrage mit der spezifischen Netzzugangsinformation zusammenhängt,
wobei eine weitere Verbindungsanfrage des Teilnehmergeräts (20) während wenigstens des Zeitintervalls, welches der Blockzeitinformation entspricht, oder während wenigstens eines weiteren Zeitintervalls, welches einer weiteren Blockierzeitinformation entspricht, blockiert wird.

2. Verfahren nach Anspruch 1, wobei eine Verfügbarkeitsnachricht von dem öffentlichen, landgestützten Mobilfunknetz (10) an das Teilnehmergerät (20) gesendet wird,
-- wobei die Verfügbarkeitsnachricht bezüglich der spezifischen Netzzugangsinformation anzeigt, dass die Blockierung einer weiteren Verbindungsanfrage des Teilnehmergeräts (20) zu entfernen ist, wobei die weitere Verbindungsanfrage mit der spezifischen Netzzugangsinformation zusammenhängt, und/oder
wobei die Verfügbarkeitsnachricht bezüglich der weiteren spezifischen Netzzugangsinformation anzeigt, dass das Blockieren weiterer Verbindungsanfragen des Teilnehmergeräts (20) aufzuheben ist, wobei die weiteren Verbindungsanfragen mit der weiteren spezifischen Netzzugangsinformation zusammenhängen.

3. Verfahren nach einem der vorhergehenden Ansprüche, wobei die spezifische Netzzugangsinformation und/oder die weitere spezifische Netzzugangsinformation ein Zugangspunktname (APN) ist.

4. Verfahren nach einem der vorhergehenden Ansprüche, wobei ein Ausschalten oder wenigstens eine teilweise Deaktivierung des Teilnehmergeräts (20):
-- in einer Löschung der Blockierzeitinformation und/oder der weiteren Blockierzeitinformation in dem Teilnehmergerät (20), und/oder
-- in einer wenigstens zeitweisen Nichtanwendbarkeit der Blockierzeitinformation und/oder der weiteren Blockierzeitinformation in dem Teilnehmergerät (20) resultiert.

5. Verfahren nach einem der vorhergehenden Ansprüche, wobei
-- eine Änderung der Blockierzeitinformation und/oder
-- eine Änderung der weiteren Blockierzeitinformation und/oder
-- eine Änderung der Anwendbarkeit oder Nichtanwendbarkeit der Blockierzeitinformation und/oder
-- eine Änderung der Anwendbarkeit oder Nichtanwednbarkeit der weiteren Blockierzeitinfromation,
übermittelt wird durch:
-- eine Nicht-Zugangs-Protokollschichten (NAS) Verbindung, oder
-- eine Zugangs-Protokollschichten (AS) Schicht, oder
-- einen einen, insbesondere externen, Applikationsserver umfassenden Mechanismus und in transparenter Weise an das öffentliche, landgestützte Mobilfunknetz (10), oder
-- eine in der aktuellen Funkzelle des Teilnehmergeräts (20) gesendete Nachricht.

6. Verfahren nach einem der vorhergehenden Ansprüche, wobei
-- eine Änderung der Blockierzeitinformation und/oder
-- eine Änderung der weiteren Blockierzeitinformation und/oder
-- eine Änderung der Anwendbarkeit oder Nichtanwendbarkeit der Blockierzeitinformation und/oder
-- eine Änderung der Anwendbarkeit oder Nichtanwendbarkeit der weitere Blockierzeitinformation
ausgelöst wird durch:
-- eine Nicht-Zugangs-Protokollschichten (NAS) Verbindung, oder
-- eine Applikationsserver (AS) Schicht, oder
-- einen einen, insbesondere externen, Applikationsserver umfassenden Mechanismus und in transparenter Weise an das öffentliche, landgestützte Mobilfunknetz (10), oder
-- eine in der aktuellen Funkzelle des Teilnehmergeräts (20) gesendete Nachricht, oder
-- eine Benutzereingabe über die Benutzerschnittstelle des Teilnehmergeräts (20), oder
-- eine Benutzereingabe auf einer Webseite, insbesondere eine über das Teilnehmergerät (20) aufgerufene Webseite.

7. Verfahren nach einer der vorhergehenden Ansprüche, wobei die Blockierzeitinformation und/oder die weitere Blockierzeitinformation davon abhängt, ob das öffentliche, landgestützte Mobilfunknetz (10):
-- ein öffentliches, landgestütztes Heimmobilfunknetz des Teilnehmergeräts (20), oder
-- ein öffentliches, landgestütztes Gastmobilfunknetz des Teilnehmergeräts (20) ist.

8. Verfahren nach einem der vorhergehenden Ansprüche, wobei die Blockierzeitinformation und/oder die weitere Blockierzeitinformation von der spezifischen Netzzugangsinformation und/oder der spezifischen Applikation auf dem die Netzzugangsinformation verwendenden Teilnehmergerät (20) abhängt.

9. Öffentliches, landgestütztes Mobilfunknetz (10), die Steuerung der Herstellung einer Paketdatenverbindung eines Teilnehmergeräts (20) mit einem Paketdatennetz (10', 15, 16, 17) bereitstellend, wobei das Paketdatennetz (10', 15, 16, 17) entweder
-- eine Paketvermittlungsdomäne (10') oder ein Paketdatennetz (PDN) eines öffentlichen, landgestützten Mobilfunknetzes (10), oder
-- ein externes Paketdatennetz (15, 16), oder
-- ein internes Paketdatennetz (17), oder
-- ein virtuelles privates Netz ist,
wobei mittels einer Verbindungsanfrage des Teilnehmergeräts (20) die Herstellung einer Paketdatenverbindung durch das Teilnehmergerät (20) bei dem Paketdatennetz (10', 15, 16, 17) angefragt wird, wobei die Verbindungsanfrage mit einer spezifischen Netzzugangsinformation zusammenhängt, und wobei das öffentliche, landgestützte Mobilfunknetz (10) derart vorgesehen ist, dass im Falle der Erkennung einer Nichtverfügbarkeitssituation bezüglich der spezifischen Netzzugangsinformation durch das öffentliche, landgestützte Mobilfunknetz (10) die Generierung einer Nichtverfügbarkeitsnachricht an das Teilnehmergerät (20), beinhaltend Hinweise auf fehlende oder unbekannte Ressourcen bezüglich der spezifischen Netzzugangsinformation, derart vorgesehen ist, dass
-- eine weitere Verbindungsanfrage des Teilnehmergeräts (20) während wenigstens eines Zeitintervalls entsprechend einer Blockierzeitinformation blockiert wird, wobei die weitere Verbindungsanfrage mit der spezifischen Netzzugangsinformation zusammenhängt, und
-- eine weitere Verbindungsanfrage des Teilnehmergeräts (20) während wenigstens des Zeitintervalls entsprechend der Blockzeitinformation oder während wenigstens eines weiteren Zeitintervalls entsprechend einer weiteren Blockierzeitinformation, blockiert wird

10. Teilnehmergerät (20), die Steuerung der Herstellung einer Paketdatenverbindung des Teilnehmergeräts (20) mit einem Paketdatennetz (10', 15, 16, 17) mittels Nutzung eines öffentlichen, landgestützten Mobilfunknetzes (10), wobei das Paketdatennetz (10', 15, 16, 17) entweder
-- eine Paketvermittlungsdomäne (10') oder ein Paketdatennetz (PDN) eines öffentlichen, landgestützten Mobilfunknetzes (10), oder
-- ein externes Paketdatennetz (15, 16), oder
-- ein internes Paketdatennetz (17), oder
-- ein virtuelles privates Netz ist,
wobei mittels einer Verbindungsanfrage des Teilnehmergeräts (20) die Herstellung einer Paketdatenverbindung durch das Teilnehmergerät (20) bei dem Paketdatennetz (10', 15, 16, 17) angefragt wird, wobei die Verbindungsanfrage mit einer spezifischen Netzzugangsinformation zusammenhängt, und wobei das Teilnehmergerät (20) derart vorgesehen ist, dass bei Empfang einer Nichtverfügbarkeitsnachricht, wobei die Nichtverfügbarkeitsnachricht von dem öffentlichen, landgestütztem Mobilfunknetz (10) an das Teilnehmergerät gesendet wird, wobei die Nichtverfügbarkeitsnachricht Hinweise auf fehlende oder unbekannte Ressourcen bezüglich der spezifischen Netzzugangsinformation beinhaltet,
-- eine weitere Verbindungsanfrage des Teilnehmergeräts (20) während wenigstens einem Zeitintervall entsprechend einer Blockierzeitinformation blockiert wird, wobei die weitere Verbindungsanfrage mit der spezifischen Netzzugangsinformation zusammenhängt, und
-- eine weitere Verbindungsanfrage des Teilnehmergeräts (20) während wenigstens des Zeitintervalls entsprechend der Blockierzeitinformation oder während wenigstens eines weiteren Zeitintervalls entsprechend einer weiteren Blockierzeitinformation blockiert ist, wobei die weitere Verbindungsanfrage mit einer weiteren spezifischen Netzzugangsinformation zusammenhängt.

11. Teilnehmergerät (20) nach Anspruch 10, wobei das Teilnehmergerät (20) einen Speicher zur Speicherung der Blockierzeitinformation und/oder der weiteren Blockierzeitinformation aufweist.

12. Teilnehmergerät (20) nach Anspruch 10 oder 11, wobei ein Ausschalten oder ein wenigstens teilweises Deaktivieren des Teilnehmergeräts (20):
-- in einer Löschung der Blockierzeitinformation und/oder der weiteren Blockierzeitinformation in dem Teilnehmergerät (20), und/oder
-- in einer wenigstens zeitweisen Nichtanwendbarkeit der Blockierzeitinformation und/oder der weiteren Blockierzeitinformation in dem Teilnehmergerät resultiert.

13. Programm, umfassend einen computerlesbaren Programmcode zur Ausführung eines Verfahrens gemäß einem der Ansprüche 1 bis 8 oder zur Konfiguration oder Steuerung eines Teilnehmergeräts (20) nach einem der Ansprüche 10 bis 12 oder eines öffentlichen, landgestützten Mobilfunknetzes nach Anspruch 9.

## Revendications

1. Procédé de commande de l'établissement d'une connexion de données par paquets d'un Equipement Utilisateur (20) avec un réseau de données par paquets (10', 15, 16, 17) au moyen d'un réseau mobile terrestre public (10), dans lequel le réseau de données par paquets (10', 15, 16, 17) est l'un
- d'un domaine commuté par paquets (10') ou d'un Réseau de Données par Paquets (PDN) d'un réseau mobile terrestre public (10), ou
- d'un réseau de données par paquets externe (15, 16), ou
- d'un réseau de données par paquets interne (17), ou
- d'un réseau privé virtuel,
dans lequel au moyen d'une requête de connexion liée à des informations d'accès à un réseau spécifique, l'Equipement Utilisateur (20) requiert l'établissement de la connexion de données par paquets avec le réseau de données par paquets (10', 15, 16, 17), et dans lequel en cas de détection par le réseau mobile terrestre public (10) d'une situation d'indisponibilité concernant les informations d'accès à un réseau spécifique :
- un message d'indisponibilité est envoyé à l'Equipement Utilisateur (20) indiquant des ressources manquantes ou inconnues concernant les informations d'accès à un réseau spécifique, et
- une requête de connexion ultérieure de l'Equipement Utilisateur (20) liée aux informations d'accès à un réseau spécifique est bloquée durant au moins un intervalle de temps correspondant à des informations de temps de blocage,
dans lequel une requête de connexion ultérieure de l'Equipement Utilisateur (20) liée à des informations d'accès à un réseau spécifique supplémentaires est bloquée durant au moins l'intervalle de temps correspondant aux informations de temps de blocage ou durant au moins un intervalle de temps supplémentaire correspondant à des informations de temps de blocage supplémentaires.

2. Procédé selon la revendication 1, dans lequel un message de disponibilité est envoyé depuis le réseau mobile terrestre public (10) à l'Equipement Utilisateur (20),
- dans lequel le message de disponibilité concernant les informations d'accès à un réseau spécifique indique que le blocage de requêtes de connexion ultérieures de l'Equipement Utilisateur (20) liées aux informations d'accès à un réseau spécifique doit être supprimé ;
et/ou
- dans lequel le message de disponibilité concernant les informations d'accès à un réseau spécifique supplémentaires indique que le blocage de requêtes de connexion ultérieures de l'Equipement Utilisateur (20) liées aux informations d'accès à un réseau spécifique supplémentaires doit être supprimé.

3. Procédé selon l'une quelconque des revendications précédentes, dans lequel les informations d'accès à un réseau spécifique et/ou les informations d'accès à un réseau spécifique supplémentaires sont un nom de point d'accès (APN).

4. Procédé selon l'une quelconque des revendications précédentes, dans lequel un arrêt ou au moins une désactivation partielle de l'Equipement Utilisateur (20) entraîne :
- un effacement des informations de temps de blocage et/ou des informations de temps de blocage supplémentaires dans l'Equipement Utilisateur (20), et/ou
- au moins une inapplicabilité temporaire des informations de temps de blocage et/ou des informations de temps de blocage supplémentaires dans l'Equipement Utilisateur (20).

5. Procédé selon l'une quelconque des revendications précédentes, dans lequel
- un changement des informations de temps de blocage et/ou
- un changement des informations de temps de blocage supplémentaires et/ou
- un changement de l'applicabilité ou de l'inapplicabilité des informations de temps de blocage et/ou
- un changement de l'applicabilité ou de l'inapplicabilité des informations de temps de blocage supplémentaires,
est transmis au moyen :
- d'une communication de Strate Non d'Accès (NAS), ou
- d'une couche de Strate d'Accès (AS), ou
- d'un mécanisme impliquant un serveur d'application de préférence externe et de manière transparente au réseau mobile terrestre public (10) , ou
- d'une diffusion de message dans la cellule courante de l'Equipement Utilisateur (20).

6. Procédé selon l'une quelconque des revendications précédentes, dans lequel
- un changement des informations de temps de blocage et/ou
- un changement des informations de temps de blocage supplémentaires et/ou
- un changement de l'applicabilité ou de l'inapplicabilité des informations de temps de blocage et/ou
- un changement de l'applicabilité ou de l'inapplicabilité des informations de temps de blocage supplémentaires,
est déclenché au moyen :
- d'une communication de Strate Non d'Accès (NAS), ou
- d'une couche de Serveur d'Application (AS), ou
- d'un mécanisme impliquant un serveur d'application de préférence externe et de manière transparente au réseau mobile terrestre public (10) , ou
- d'une diffusion de message dans la cellule courante de l'Equipement Utilisateur (20), ou
- d'une entrée d'utilisateur par l'intermédiaire de l'interface utilisateur de l'Equipement Utilisateur, ou
- d'une entrée d'utilisateur sur un site web, notamment un site web sollicité par l'intermédiaire de l'Equipement Utilisateur (20).

7. Procédé selon l'une quelconque des revendications précédentes, dans lequel les informations de temps de blocage et/ou les informations de temps de blocage supplémentaires dépendent de la nature du réseau mobile terrestre public (10) à savoir s'il s'agit :
- du réseau mobile terrestre public de rattachement de l'Equipement Utilisateur (20), ou
- du réseau mobile terrestre public visité de l'Equipement Utilisateur (20).

8. Procédé selon l'une quelconque des revendications précédentes, dans lequel les informations de temps de blocage et/ou les informations de temps de blocage supplémentaires dépendent des informations d'accès à un réseau spécifique et/ou de l'application spécifique de l'Equipement Utilisateur (20) utilisant les informations d'accès à un réseau.

9. Réseau mobile terrestre public (10), assurant une commande de l'établissement d'une connexion de données par paquets d'un Equipement Utilisateur (20) avec un réseau de données par paquets (10', 15, 16, 17), le réseau de données par paquets (10', 15, 16, 17) étant l'un
- d'un domaine commuté par paquets (10') ou d'un Réseau de Données par Paquets (PDN) d'un réseau mobile terrestre public (10), ou
- d'un réseau de données par paquets externe (15, 16), ou
- d'un réseau de données par paquets interne (17), ou
- d'un réseau privé virtuel,
dans lequel au moyen d'une requête de connexion de l'Equipement Utilisateur (20) liée à des informations d'accès à un réseau spécifique, l'établissement de la connexion de données par paquets est requise par l'Equipement Utilisateur (20) auprès du réseau de données par paquets (10', 15, 16, 17), et dans lequel le réseau mobile terrestre public est agencé de telle sorte que, en cas de détection par le réseau mobile terrestre public (10) d'une situation d'indisponibilité concernant les informations d'accès à un réseau spécifique, un message d'indisponibilité est généré et envoyé à l'Equipement Utilisateur (20) indiquant des ressources manquantes ou inconnues concernant les informations d'accès à un réseau spécifique de telle sorte
- qu'une requête de connexion ultérieure de l'Equipement Utilisateur (20) liée aux informations d'accès à un réseau spécifique soit bloquée durant au moins un intervalle de temps correspondant à des informations de temps de blocage, et
- qu'une requête de connexion ultérieure de l'Equipement Utilisateur (20) liée à des informations d'accès à un réseau spécifique supplémentaires soit bloquée durant au moins l'intervalle de temps correspondant aux informations de temps de blocage ou durant au moins un intervalle de temps supplémentaire correspondant à des informations de temps de blocage supplémentaires.

10. Equipement Utilisateur (20) assurant une commande de l'établissement d'une connexion de données par paquets de l'Equipement Utilisateur (20) avec un réseau de données par paquets (10', 15, 16, 17), le réseau de données par paquets (10', 15, 16, 17) étant l'un
- d'un domaine commuté par paquets (10') ou d'un Réseau de Données par Paquets (PDN) d'un réseau mobile terrestre public (10), ou
- d'un réseau de données par paquets externe (15, 16), ou
- d'un réseau de données par paquets interne (17), ou
- d'un réseau privé virtuel,
dans lequel au moyen d'une requête de connexion de l'Equipement Utilisateur (20) liée à des informations d'accès à un réseau spécifique, l'établissement de la connexion de données par paquets est requise par l'Equipement Utilisateur (20) auprès du réseau de données par paquets (10', 15, 16, 17), et dans lequel le réseau mobile terrestre public est agencé de telle sorte que, à la réception d'un message d'indisponibilité envoyé à l'Equipement Utilisateur (20) depuis le réseau mobile terrestre public (10), indiquant des ressources manquantes ou inconnues concernant les informations d'accès à un réseau spécifique,
- une requête de connexion ultérieure de l'Equipement Utilisateur (20) liée aux informations d'accès à un réseau spécifique soit bloquée durant au moins un intervalle de temps correspondant à des informations de temps de blocage, et
- une requête de connexion ultérieure de l'Equipement Utilisateur (20) liée à des informations d'accès à un réseau spécifique supplémentaires soit bloquée durant au moins l'intervalle de temps correspondant aux informations de temps de blocage ou durant au moins un intervalle de temps supplémentaire correspondant à des informations de temps de blocage supplémentaires.

11. Equipement Utilisateur (20) selon la revendication 10, dans lequel l'Equipement Utilisateur (20) comprend une mémoire pour mémoriser les informations de temps de blocage et/ou les informations de temps de blocage supplémentaires.

12. Procédé selon la revendication 10 ou 11, dans lequel un arrêt ou au moins une désactivation partielle de l'Equipement Utilisateur (20) entraîne :
- un effacement des informations de temps de blocage et/ou des informations de temps de blocage supplémentaires dans l'Equipement Utilisateur (20), et/ou
- au moins une inapplicabilité temporaire des informations de temps de blocage et/ou des informations de temps de blocage supplémentaires dans l'Equipement Utilisateur (20).

13. Programme comprenant un code de programme lisible par ordinateur pour exécuter un procédé selon l'une quelconque des revendications 1 à 8 ou pour configurer ou commander un Equipement Utilisateur (20) selon l'une quelconque des revendications 10 à 12 ou un réseau mobile terrestre public selon la revendication 9.
